# EUROPÄISCHE PATENTSCHRIFT

(11) **EP 2 741 153 B1**
(45) Veröffentlichungstag und Bekanntmachung des Hinweises auf die Patenterteilung: **26.10.2016**
(21) Anmeldenummer: 12195653.6
(22) Anmeldetag: 05.12.2012
(51) Int. Cl.: G05B 15/02, G05B 21/02, F03D 7/04

(54) **Verfahren und Vorrichtung zum Betreiben einer Windenergieanlage**
Method and device for operating a wind energy plant
Procédé et dispositif destinés au fonctionnement d'une éolienne

(43) Veröffentlichungstag der Anmeldung: 11.06.2014
(73) Patentinhaber: Nordex Energy GmbH, 22419 Hamburg (DE)
(72) Erfinder: Gessert, Malte, 22397 Hamburg (DE); Jöhnke, Ulf, 20253 Hamburg (DE); Jurkat, Mark, 22844 Norderstedt (DE); Baumgärtner, Meinrad, 20259 Hamburg (DE)
(74) Vertreter: Epping - Hermann - Fischer

(56) Entgegenhaltungen:
- EP-A1- 1 519 040
- EP-A1- 1 736 664
- US-A1- 2009 160 189
- US-A1- 2010 305 767
- US-B1- 6 243 610
- US-B2- 8 090 972

## Beschreibung

Die Erfindung betrifft ein Verfahren zum Betreiben wenigstens einer Windenergieanlage. Weiterhin betrifft die Erfindung eine Vorrichtung zur Regelung wenigstens einer Windenergieanlage, die eingerichtet ist, das Verfahren auszuführen.

Zur Regelung der Blind- und Wirkleistungsabgabe einer Windenergieanlage oder eines Windparks, der wenigstens eine Windenergieanlage umfasst, wird häufig eine Regelungsvorrichtung eingesetzt. Die Regelungsvorrichtung ist eingerichtet insbesondere für die Durchführung eines Regelungsverfahrens relevante Eingangsgrößen eines elektrischen Stromversorgungsnetzes wie der Netzspannung, der Netzfrequenz, einer Blindleistung, einer Wirkleistung, einer Scheinleistung, des Leistungsfaktors oder des Phasenwinkels zwischen dem elektrischen Strom und der Netzspannung des elektrischen Versorgungsnetzes, an das die wenigstens eine Windenergieanlage angeschlossen ist, zu empfangen und Signale für die Regelung der wenigstens einen Windenergieanlage in Abhängigkeit der empfangenen Eingangsgrößen zu ermitteln und für die wenigstens eine Windenergieanlage bereitzustellen. Die Regelungsvorrichtung ist beispielsweise eine speicherprogrammierbare Steuerung (SPS, englisch: programmable logic controller (PLC)) oder ein Remote Field Controller (RFC).

Die Regelungsvorrichtung kann beispielsweise eingerichtet sein, lediglich für die Durchführung eines Regelungsverfahrens relevante Eingangsgrößen von einer externen Vorrichtung zu empfangen, oder solche von einer externen Vorrichtung abzufragen.

Die Abfrage der Eingangsgrößen durch die Regelungsvorrichtung kann beispielsweise auf einer Client/Server-Architektur basieren. Dabei arbeitet eine Messvorrichtung, die beispielsweise einen Signalwertumformer umfasst, der eingerichtet ist, Messdaten von Netzgrößen des elektrischen Versorgungsnetzes zu erfassen, zu verarbeiten und die Messdaten bereitzustellen, als Server, an dem sich ein oder mehrere Regelungsvorrichtungen als Client anmelden und Messdaten, insbesondere die Istwerte vorgegebener Größen abfragen können. Der Signalwertumformer kann beispielsweise vom Typ SINEAX CAM der Fa. Camille Bauer sein.

Wird für die Kommunikation zwischen Messvorrichtung und Regelungsvorrichtung ein nicht deterministisches Protokoll wie zum Beispiel das Modbus-TCP-Protokoll verwendet, kann nicht sichergestellt werden, dass ein durch die Regelungsvorrichtung abgefragter Wert innerhalb ausreichend kurzer Zeit bereitgestellt wird. Dies kann zur Regelung der wenigstens einen Windenergieanlage auf Basis von veralteten Messwerten führen.

Die US 6,243,610 B1 beschreibt ein Verfahren zur Steuerung von Vorrichtungen, die an zur Steuerung an ein Netzwerk angeschlossen sind. Dabei wird eine zeitliche Verzögerung während der Signalübertragung berücksichtigt.

Es ist daher wünschenswert, ein Verfahren zum Betreiben wenigstens einer Windenergieanlage anzugeben, das eine präzise Regelung der wenigstens einen Windenergieanlage ermöglicht. Zudem ist es wünschenswert, eine Vorrichtung zum Ausführen des Verfahrens anzugeben.

Die Erfindung zeichnet sich gemäß Aspekten durch ein Verfahren und eine korrespondierende Vorrichtung zum Betreiben wenigstens einer Windenergieanlage aus.

Gemäß zumindest einer Ausführungsform der Erfindung wird eine Abfrage nach einer Eingangsgröße einer für die Regelung der wenigstens einen Windenergieanlage relevanten Größe zu einem ersten Zeitpunkt gesendet. Das Senden der Abfrage nach der Eingangsgröße wird mit einem vorgegebenen zeitlichen Abstand regelmäßig wiederholt. Die Eingangsgröße wird zu einem zweiten Zeitpunkt empfangen. Eine Differenz zwischen dem ersten und dem zweiten Zeitpunkt wird ermittelt. Die Differenz zwischen dem ersten und dem zweiten Zeitpunkt wird mit dem zeitlichen Abstand verglichen. Ein Zählerstand eines Zählers wird auf den Wert 0 gesetzt, wenn die Differenz kleiner als der zeitliche Abstand ist. Der Zählerstand des Zählers wird um den Wert 1 erhöht, wenn die Differenz gleich dem oder größer als der zeitliche Abstand ist. Ein Regelungsverfahren zur Regelung wenigstens einer Windenergieanlage wird aus einer Mehrzahl von vorgegebenen Regelungsverfahren in Abhängigkeit des Zählerstandes ermittelt, der von der ermittelten Differenz abhängig ist. Gemäß Ausführungsformen wird ein Sollwert zur Regelung der mindestens einen Windenergieanlage unter Verwendung des ermittelten Regelungsverfahrens ermittelt.

Es ist möglich, die Zeit zwischen der Abfrage und dem Empfang der Eingangsgröße zu ermitteln. Es ist möglich, der abgefragten Eingangsgröße eine Kommunikationszeit zuzuordnen, die zwischen der Abfrage und dem Empfangen vergangen ist.

Dies ermöglicht Rückschlüsse auf die Aktualität der Eingangsgröße und dessen Verwendbarkeit für die Regelung der wenigstens einen Windenergieanlage. Die Eingangsgröße entspricht beispielsweise im Wesentlichen einem Istwert der Größe, wenn die Kommunikationszeit sehr kurz ist, so dass der Zeitpunkt des Empfangs der Eingangsgröße sehr nahe am Zeitpunkt des Sendens der Abfrage liegt. Die Eingangsgröße kann auch einen älteren Messwert der Größe umfassen, wenn die Kommunikationszeit verhältnismäßig lange ist. Die Eingangsgröße kann auch einen älteren Messwert der Größe umfassen, der aus einem Speicher ausgelesen wird, wenn kein aktuellerer Wert der Größe vorliegt.

Somit wird die wenigstens eine Windenergieanlage beispielsweise mit einem Regelungsverfahren aus der Mehrzahl von vorgegebenen Regelungsverfahren geregelt, das zu dem Alter der empfangenen Eingangsgröße passt. Somit kann beispielsweise vermieden werden, dass veraltete Messwerte, die nicht länger als momentan vorliegende (Ist)werte aufgefasst werden können, zur Regelung als Eingangsgrößen verwendet werden. Es kann beispielsweise auch vermieden werden, dass Regelungsverfahren, die für eine präzise Regelung aktuelle Werte benötigen, auf Basis von zu alten Messwerten die Regelung der wenigstens einen Windenergieanlage durchführen.

Die Eingangsgröße der für die Regelung der wenigstens einen Windenergieanlage relevanten Größe umfasst gemäß Ausführungsformen einen Wert einer elektrischen Größe eines elektrischen Versorgungsnetzes. Die wenigstens eine Windenergieanlage ist insbesondere mit dem elektrischen Versorgungsnetz gekoppelt und speist elektrische Energie in das elektrische Versorgungsnetz ein. Das elektrische Versorgungsnetz überträgt die elektrische Energie beispielsweise an Verbraucher.

Die Eingangsgröße der elektrischen Größe umfasst insbesondere einen Wert aus: einer Netzspannung des elektrischen Versorgungsnetzes, einer Netzfrequenz des elektrischen Versorgungsnetzes, einem Leistungsfaktor des elektrischen Versorgungsnetzes und einem Phasenwinkel zwischen dem elektrischen Strom und der Netzspannung des elektrischen Versorgungsnetzes, einer Blindleistung, einer Wirkleistung, einer Scheinleistung, eines Blindstromes, eines Wirkstromes oder eines Scheinstromes.

Gemäß weiteren Ausführungsformen wird eine Kombination der für die Regelung der wenigstens einen Windenergieanlagen relevanten Größen bei der Auswahl des Regelungsverfahrens berücksichtigt.

Die Regelgröße des Regelungsverfahrens ist jeweils insbesondere eine Leistung der wenigstens einen Windenergieanlage. Beispielsweise wird eine Blindleistung der wenigstens einen Windenergieanlage geregelt. Alternativ oder zusätzlich wird eine Wirkleistung der wenigstens einen Windenergieanlage geregelt. Alternativ oder zusätzlich wird eine Scheinleistung der wenigstens einen Windenergieanlage geregelt.

Der Wert der Eingangsgröße ist gemäß Ausführungsformen ein aktueller Istwert.

Gemäß weiteren Ausführungsformen werden mehrere Eingangsgrößen von einer Mehrzahl von zu der Vorrichtung parallelen Vorrichtungen abgefragt. Die Vorrichtungen der Mehrzahl von Vorrichtungen sind beispielsweise voneinander unterschiedlich. Beispielsweise können zwei oder drei Vorrichtungen an der gleichen Stelle (oder zumindest räumlich so benachbart, dass die Messbedingungen im wesentlichen gleich sind) angeordnet sein. Die Vorrichtungen können sich dabei insoweit unterscheiden, als dass diese qualitativ unterschiedliche Signale bereitstellen. Eine der Vorrichtungen ist beispielsweise ein Netzqualitätsmessgerät (englisch: Power Quality Meter). Das Gerät ist beispielsweise vom Typ Blackbox der Firma Elspec. Solche Vorrichtungen werden vorrangig zum Erfassen und Speichern von Messdaten verwendet, um diese für Trend- oder Fehleranalysen heran zu ziehen. Dennoch ist es möglich von den Vorrichtungen auch aktuelle Messdaten abzufragen, wenn diese über eine geeignete Schnittstelle verfügen. Eine weitere Vorrichtung ist beispielsweise ein Netzschutzgerät, dass typischer Weise Mittelwerte der Netzgrößen überwacht und hauptsächlich vorgesehen ist sicherheitsrelevante Funktionen auszulösen. Dabei sind die Anforderungen an die Messgenauigkeit nicht so hoch, wie bei dem Netzqualitätsmessgerät oder dem Leistungsmessungs- und Überwachungssystem (beispielsweise ein SINEAX CAM der Fa. Camille Bauer).

Gemäß Ausführungsformen wird die Abfrage zusammen mit einer Identifikationsnummer für die Abfrage gesendet. Beispielsweise wird der Identifikationsnummer beim Absenden der Abfrage der erste Zeitpunkt zugeordnet. Beim Empfangen des Wertes wird der Identifikationsnummer der zweite Zeitpunkt zugeordnet. Gemäß Ausführungsformen werden Zeitpunkt und Identifikationsnummer in einer Speichervorrichtung der Regelungsvorrichtung gespeichert.

Gemäß Ausführungsformen ist der erste Zeitpunkt Teil der Identifikationsnummer oder ist in dieser kodiert. Die Identifikationsnummer umfasst Informationen über den ersten Zeitpunkt. Somit muss der erste Zeitpunkt nicht gesondert zur Identifikationsnummer verarbeitet werden. Gemäß Ausführungsformen kann die Identifikationsnummer eine beliebige Zeichenkette umfassen, die eine eindeutige Zuordnung von Abfragen ermöglicht.

Der erste und der zweite Zeitpunkt können jeweils einen Wert einer absoluten Uhrzeit umfassen, beispielsweise auf Grundlage eines GPS synchronisierten Zeitsignals. Gemäß weiteren Ausführungsformen werden der erste und der zweite Zeitpunkt jeweils auf Grundlage von DCF77, MSF60, WWV, WWVB, WWVH, JJY, BPC, BPN, TDF, CHU oder einem anderen Zeitzeichensystem ermittelt.

Gemäß weiteren Ausführungsformen umfassen der erste und der zweite Zeitpunkt jeweils einen Wert eines eigenständigen Zeitsystems, insbesondere eines systemeigenen Zeitsystems. Die Zeitmessung kann zum Beispiel auf Basis von Einheiten eines Taktsignals oder einer Systemtakts (engl.: clock signal, clock cycle, system clock) einer Vorrichtung zur digitalen Datenverarbeitung erfolgen. Der erste Zeitpunkt umfasst beispielsweise den Wert des systemeigenen Zeitsystems beim Senden der Abfrage. Der zweite Zeitpunkt umfasst den Wert des systemeigenen Zeitsystems beim Empfangen des Wertes. Die Differenz ist dann der Unterschied zwischen den beiden Werten. Die Kommunikationszeit zwischen Senden und Empfangen wird durch Subtraktion der Werte gewonnen. Somit ist die Zeitdifferenz zwischen Abfrage und Empfangen bekannt. In Abhängigkeit der Zeitdifferenz wird entschieden, wie mit der empfangenen Eingangsgröße weiterhin verfahren werden soll, beispielsweise ob und für welche Regelungsverfahren der empfangene Wert verwendet wird, sodass ein präziser Betrieb der Windenergieanlage möglich ist.
Insbesondere umfasst das Ermitteln des Regelungsverfahrens ein Vergleichen des Zählerstandes mit einem vorgegebenen Vergleichswert für den Zählerstand. Die empfangene Eingangsgröße wird für die Regelung der Windenergieanlage verwendet, wenn der Zählerstand kleiner als ein vorgegebenen Vergleichswert für den Zählerstand ist. Gemäß weiterer Ausführungsformen wird eine Mehrzahl von zueinander unterschiedlichen Vergleichswerten für den Zählerstand vorgegeben. Die Regelung der Windenergieanlage erfolgt in Abhängigkeit von einem Vergleich des Zählerstandes mit der Mehrzahl von zueinander unterschiedlichen Vergleichswerten.

Gemäß weiteren Ausführungsformen wird eine statistische Verteilung der Werte der Differenz zwischen dem ersten und dem zweiten Zeitpunkt über einen Zeitraum ermittelt. Beispielsweise wird ermittelt, welcher Anteil der in dem Zeitraum empfangenen Eingangsgrößen mit einer Differenz empfangen wurde, die kleiner als der erste Vergleichswert ist. Weiter wird ermittelt, welcher Anteil der in dem Zeitraum empfangenen Eingangsgrößen mit einer Differenz empfangen wurde, die größer oder gleich dem ersten Vergleichswert und kleiner als der zweite Vergleichswert ist. Weiter wird ermittelt, welcher Anteil der in dem Zeitraum empfangenen Eingangsgrößen mit einer Differenz empfangen wurde, die größer oder gleich dem zweiten Vergleichswert ist. Aus der statistischen Verteilung wird beispielsweise ermittelt, ob die Vergleichswerte passend für die mindestens eine Windenergieanlage und das elektrische Versorgungsnetzwerk vorgegeben sind. Alternativ oder zusätzlich wird beispielsweise aus der statistischen Verteilung die Qualität der Vorrichtungen beziehungsweise des Regelsystems ermittelt. Abhängig von der ermittelten Verteilung werden beispielsweise die vorgegebenen Vergleichswerte angepasst. Gemäß weiteren Ausführungsformen wird eine zeitliche Veränderung der statischen Verteilung ermittelt. Liegt eine Veränderung vor, beispielsweise, weil Datenleitungen degradieren oder zusätzliche Windenergieanlagen im Windpark installiert wurden und somit die Menge der an die Vorrichtung gerichteten Abfragen ansteigt, wird dies beim Vorgeben der Vergleichswerte berücksichtigt und somit auch bei der Auswahl der Regelungsverfahren. Es ist also möglich, die statistische Verteilung zum ermitteln von Fehlern im System und zur Qualitätsüberprüfung, also als System zur Zustandsüberwachung (englisch: Condition Monitoring System, CMS) zu verwenden.

Gemäß einer Ausführungsform umfasst ein System wenigstens eine an ein elektrisches Versorgungsnetz angeschlossene Windenergieanlage, die Vorrichtung zum Betreiben der wenigstens einen Windenergieanlage sowie eine weitere Vorrichtung, die eingerichtet ist zum:
- Empfangen der Abfrage nach der Eingangsgröße der für die Regelung der wenigstens einen Windenergieanlage relevanten Größe von der Vorrichtung;
- Ermittlung der Eingangsgröße der für die Regelung der wenigstens einen Windenergieanlage relevanten Größe;
- Senden der Eingangsgröße der für die Regelung der wenigstens einen Windenergieanlage relevanten Größe an die Vorrichtung.

Weitere Vorteile, Merkmale und Weiterbildungen ergeben sich aus den nachfolgenden in Verbindung mit den Figuren erläuterten Beispielen.

Es zeigen:
Figur 1 eine schematische Darstellung eines Systems mit einer Mehrzahl von Windenergieanlagen gemäß einer Ausführungsform,
Figur 2 eine schematische Darstellung des Verfahrens gemäß einer Ausführungsform, und
Figur 3 eine schematische Darstellung des Verfahrens gemäß einer Ausführungsform.

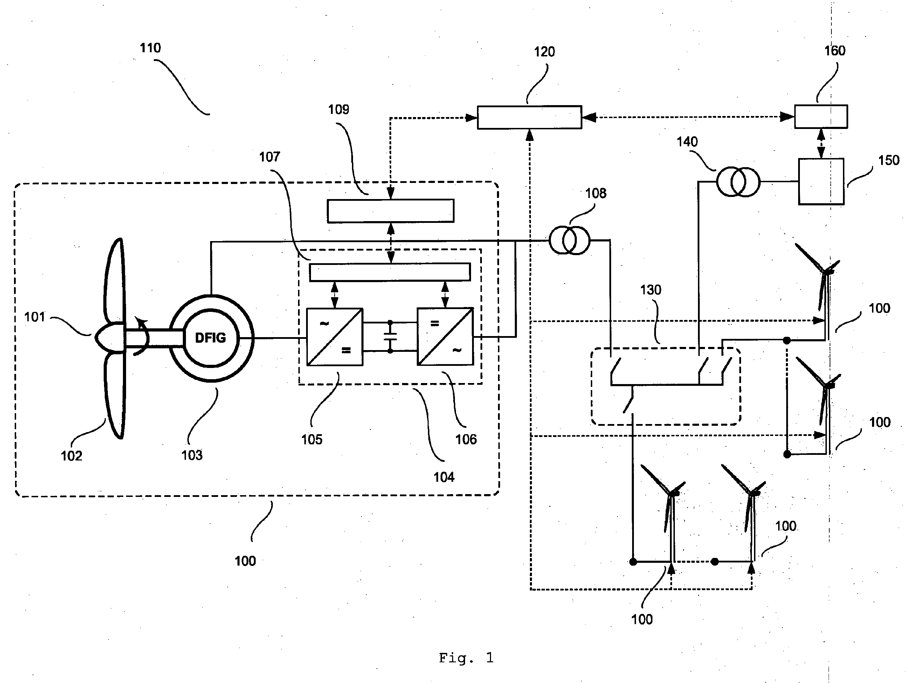

Figur 1 zeigt schematisch ein System 110 mit einer Mehrzahl von Windenergieanlagen 100. Das System umfasst weiterhin eine Regelungsvorrichtung 120 zum Regeln der Windenergieanlagen 100. Das System 110 weist weiterhin eine Vorrichtung 160 auf, die Messwerte von für die Regelung der Windenergieanlagen 100 relevanten Größen bereitstellt. Die Windenergieanlagen 100 sind mit einem elektrischen Versorgungsnetz 150 gekoppelt.

Die Windenergieanlage 100 weist ein Fundament (nicht gezeigt) auf, mittels dem die Windenergieanlage 100 auf einem Untergrund befestigt ist. Mit dem Fundament ist eine Standvorrichtung (nicht gezeigt) gekoppelt. Die Standvorrichtung ist länglich ausgedehnt und ist insbesondere ein Turm, beispielsweise ausgeführt als Stahlrohr-, Spannbeton-, Fachwerk- oder Sandwichturm.

An einem dem Fundament gegenüberliegenden Ende der Standvorrichtung ist ein Maschinenhaus (nicht gezeigt) angeordnet. Das Maschinenhaus umfasst einen Generator 103, der direkt oder indirekt mit einem Rotor 101 gekoppelt ist.

Der Rotor 101 weist wenigstens ein Rotorblatt 102 auf. Der Rotor 101 wird im Betrieb der Windenergieanlage 100 durch Wind in Rotation versetzt und diese Rotation zu dem Generator 103 übertragen, der die kinetische Energie des Rotors 101 in elektrische Energie umwandelt. Die Windenergieanlage 100 verfügt weiterhin über einen Umrichter 104, der einen generatorseitigen Umrichter (Gleichrichter) 105 und einen netzseitigen Umrichter (Wechselrichter) 106, sowie eine Regelungsvorrichtung 107 umfasst. Der Umrichter 104 ist eingerichtet, wenigstens einen Teil des von dem Generator 103 erzeugten elektrischen Stromes in ein elektrisches Stromversorgungsnetz einzuspeisen. Windenergieanlagen mit doppelt-gespeisten Asynchrongeneratoren weisen beispielsweise einen Generator 103 auf, dessen Stator direkt mit dem elektrischen Netz verbunden ist und lediglich der Rotor des Generators 103 mit dem Umrichter 104 verbunden ist. Alternative Bauformen können beispielsweise einen Synchrongenerator aufweisen, welcher nur über den Umrichter indirekt mit dem Netz verbunden ist. Die Regelungsvorrichtung 107 des Umrichters 104 ist beispielsweise dazu eingerichtet, die Drehzahl sowie das Drehmoment des Rotors des Generators 103 und damit die elektrische Leistungsabgabe des Generators 103 zu regeln. Der Umrichter 104 umfasst in Ausführungsformen eine Messvorrichtung (nicht gezeigt), die dem Umrichter 104 Daten zu den an den Anschlussklemmen des Umrichters vorliegenden elektrischen Größen bereitstellt. An der Regelungsvorrichtung 107 des Umrichters liegen somit Messwerte von beispielsweise dem eingespeisten Wirkstrom, dem eingespeisten Blindstrom, der Klemmenspannung bzw. der Spannung auf der Mittelspannungsebene, der eingespeisten Wirkleistung, der eingespeisten Blindleistung, dem Phasenwinkel oder einem Leistungsfaktor an. Die Regelungsvorrichtung 107 des Umrichters 104 ist beispielsweise eingerichtet, die eingespeiste Wirkleisung bzw. Blindleistung in Abhängigkeit der erfassten Messgrößen sowie von einer Regelungsvorrichtung 109 bereitgestellten Sollwertvorgaben zu regeln. Erfolgt die Bereitstellung der Sollwertvorgaben auf Basis aktueller Eingangsgrößen, kann mit Vorteil Einfluss auf die in dem elektrischen Versorgungsnetz 150 vorliegenden Bedingungen genommen werden. Zum Beispiel kann eine zeitnahe Regelung der von der Windenergieanlage 100 abgegeben Blindleistung in Abhängigkeit von Änderungen der Netzspannung oder eine zeitnahe Regelung der von der Windenergieanlage 100 abgegeben Wirkleistung in Abhängigkeit von Änderungen der Netzfrequenz erfolgen. Andererseits verhindert das erfindungsgemäße Verfahren, dass die Regelung der Windenergieanlage gemäß veralteten Messwerten erfolgt und eine Regelung der abgegebenen Blind- oder Wirkleistung eine Destabilisierung des elektrischen Stromversorgungsnetzes bewirkt.Die Windenergieanlage 100 umfasst weiterhin einen Transformator 108, über welchen sie direkt oder indirekt mit dem elektrischen Versorgungsnetz 150 verbunden ist. In Ausführungsformen umfasst das System 110 eine Übergabestation 130, über welche eine Mehrzahl von Windenergieanlagen 100 eines Windparks, der ein elektrisches Netzwerk aufweist, mit dem elektrischen Versorgungsnetz verbunden sind. In Ausführungsformen kann die Anbindung des Windparks bestehend aus einer Mehrzahl von Windenergieanlagen 100 über einen weiteren Transformator 140 vorgenommen sein. Beispielsweise können die Transformatoren 108 und 140 für die Transformation auf unterschiedliche Spannungsniveaus vorgesehen sein.

Die Windenergieanlage 100 umfasst weiterhin eine Regelungsvorrichtung 109 zur Regelung der Windenergieanlage 100. Die Regelungsvorrichtung 109 ist beispielsweise eingerichtet, die Leistungsabgabe der Windenergieanlage 100 zu regeln, indem beispielsweise Sollwertvorgaben an die Regelungsvorrichtung 107 des Umrichters 104 bereitgestellt werden. Weiterhin ist die Regelungsvorrichtung 109 eingerichtet z.B. Sollwertvorgaben an eine weitere Regelungsvorrichtung (nicht gezeigt) bereitzustellen, mit welcher die Ausrichtung der Rotorblätter 102 des Rotors 101 eingestellt werden kann. Durch die Veränderung des Anstellwinkels der Rotorblätter 102 kann eingestellt werden, welche Leistung der Rotor 101 durch die Wechselwirkung mit dem den Rotor anströmenden Wind aus dem Wind aufnehmen kann. Die Regelungsvorrichtung 109 ist also eingerichtet, durch Sollwertvorgaben an eine Regelungsvorrichtung zur Verstellung des Rotorblattanstellwinkels, die Drehzahl sowie das Drehmoment des Rotors 101 zu regeln und, durch Sollwertvorgaben an eine Regelungsvorrichtung 107, die Drehzahl sowie das Drehmoment des Generators 103 zu regeln. Die Regelungsvorrichtung 109 ist somit eingerichtet, die Leistungsaufnahme des Rotors 101 sowie die Leistungsabgabe des Generators 103 und damit die elektrische Leistungsabgabe der Windenergieanlage 100 an das elektrische Versorgungsnetz 150 zu regeln.

Die Regelungsvorrichtung 109 regelt die Leistungsaufnahme des Rotors 101 sowie die Leistungsabgabe des Generators 103 und damit die elektrische Leistungsabgabe der Windenergieanlage 100 an eine elektrisches Versorgungsnetz 150 in Abhängigkeit der Vorgaben der Regelungsvorrichtung 120.

Insbesondere ist die Regelungsvorrichtung 120 mit einer Mehrzahl von Windenergieanlagen 100 gekoppelt, i.e. die Regelungsvorrichtung 120 ist kommunikativ mit den Regelungsvorrichtungen 109 einer Mehrzahl von Windenergieanlagen verbunden. Die Regelungsvorrichtung 120 ist insbesondere eingerichtet, eine Mehrzahl von Windenergieanlagen 100 eines Windparks durch die Vorgabe von Sollwerten an die Regelungsvorrichtungen 109 zu regeln. Die Regelungsvorrichtung 120 ermöglicht beispielsweise, dass der Windpark dynamischen Anforderungen an die Blindleistungseinspeisung und/oder Wirkleistungseinspeisung in das elektrischen Versorgungsnetz 150 erfüllt. Beispielsweise ist die Regelungsvorrichtung 120 dazu eingerichtet, eine Wirkung- und/oder Blindleistungsregelung so vorzunehmen, dass die Leistungseinspeisung in das elektrische Stromversorgungsnetz 150 mit den jeweiligen für das Stromversorgungsnetz geltenden Netzanschlussrichtlinien (Grid Codes) konform ist. Die Regelungsvorrichtung 120 ist eingerichtet für die Leistungsregelung Eingangsgrößen der Vorrichtung 160 zu verarbeiten. Alternativ oder zusätzlich kann die Vorrichtung 160 auch dazu eingerichtet, externe Sollwertvorgaben, beispielsweise vom Betreiber des Windparks oder des Stromversorgungsnetzes, an die Regelungsvorrichtung 120 zu übermitteln.

Beispielsweise ist die Regelungsvorrichtung 120 an einer zentralen Stelle im Windpark installiert, insbesondere in der Übergabestation 130. Alternativ kann die Regelungsvorrichtung 120 auch einem separaten Gebäude vorgehalten werden. Für kleinere Windparks bietet es sich an, die Regelungsvorrichtung 120 in einer der Windenergieanlagen 100 vorzuhalten. Die Regelungsvorrichtung 120 ist eingerichtet, die Windenergieanlagen 100 des Windparks jeweils so zu regeln, dass vorgegebene Netzanschlussrichtlinien (Grid Codes) eingehalten werden.

Die Regelungsvorrichtung 120 empfängt von der Vorrichtung 160 jeweils Eingangsgrößen von für die Regelung der Windenergieanlagen 100 jeweils relevanten Größen.

Die Vorrichtung 160 ist beispielsweise von dem Betreiber des Versorgungsnetzes 150 bereitgestellt. Insbesondere ist die Vorrichtung 160 eingerichtet, Werte von mindestens einer Größe aus Netzspannung, Netzfrequenz, Leistungsfaktor, Phasenwinkel als Eingangsgrößen für die Regelung eines an das Versorgungsnetz angeschlossenen Windparks bereitzustellen.

Die Vorrichtung 160 umfasst beispielsweise einen Server, an dem sich eine oder mehrere Vorrichtungen 120 anmelden können, um Werte der Netzgrößen als Eingangsgrößen abzufragen. Die Vorrichtung 160 umfasst beispielsweise einen Signalwertumformer, der eingerichtet ist, Messdaten von Netzgrößen des elektrischen Versorgungsnetzes zu erfassen, zu verarbeiten und die Messdaten bereitzustellen. An der Vorrichtung 160 können sich ein oder mehrere Regelungsvorrichtungen 120 (z.B. von unterschiedlichen Windparks) als Client anmelden und Messdaten, insbesondere vorgegebener elektrischer Größen abfragen. Der Signalwertumformer kann beispielsweise ein SINEAX CAM der Fa. Camille Bauer sein.

Zum Regeln der Windenergieanlage 100 sendet die Regelungsvorrichtung 120 eine Abfrage nach einem Wert einer Eingangsgröße an die Vorrichtung 160. Die Vorrichtung 160 empfängt die Abfrage, und sendet den Wert der abgefragten Eingangsgröße an die Regelungsvorrichtung 120. Der empfangene Wert wird dann von der Regelungsvorrichtung 120 für die Regelung der Windenergieanlage 100 verwendet.

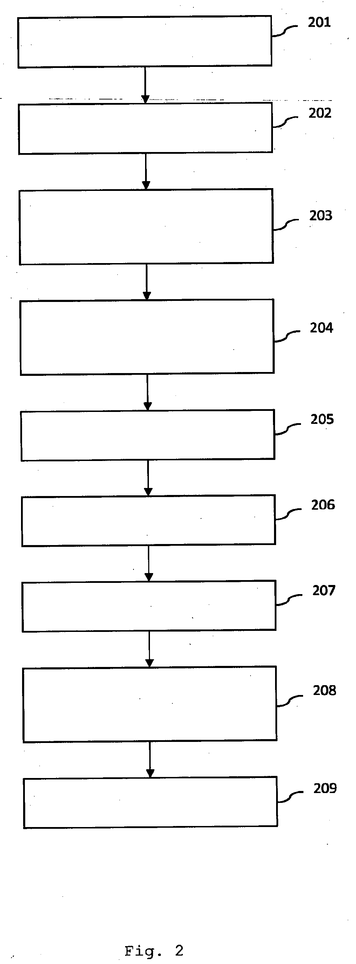

Figur 2 zeigt schematisch ein Ablaufdiagramm eines Verfahrens gemäß einer Ausführungsform.

In Schritt 201 wird von der Regelungsvorrichtung 120 ein erster Zeitpunkt t1 ermittelt.

In Schritt 202 wird von der Regelungsvorrichtung 120 eine Identifikationsnummer ermittelt. Die Identifikationsnummer wird gemäß Ausführungsformen dem ersten Zeitpunkt t1 zugeordnet.

In Schritt 203 wird von der Regelungsvorrichtung 120 eine Größe unter Verwendung der Identifikationsnummer als Eingangsgröße abgefragt. Das Abfragen umfasst insbesondere das Absenden einer Abfrage an die Vorrichtung 160.

In Schritt 204 wird von der Regelungsvorrichtung 120 unter Verwendung der Identifikationsnummer die Eingangsgröße empfangen. Insbesondere wird die Eingangsgröße von der Vorrichtung 160 empfangen.

In Schritt 205 wird von der Regelungsvorrichtung 120 ein zweiter Zeitpunkt t2 ermittelt, zu dem die Eingangsgröße empfangen wurde.

In Schritt 206 wird von der Regelungsvorrichtung 120 eine Differenz Δt zwischen dem ersten Zeitpunkt t1 und dem zweiten Zeitpunkt t2 ermittelt. Dazu kann beispielsweise der Zeitpunkt t1 unter Verwendung der Identifikationsnummer aus einer Speichervorrichtung der Regelungsvorrichtung 120 ausgelesen werden oder durch die Regelungsvorrichtung 120 direkt aus der Identifikationsnummer ermittelt werden.

In Schritt 207 wird von der Regelungsvorrichtung 120 ein Regelungsverfahren zur Regelung der Windenergieanlage 100 aus einer Mehrzahl von vorgegebenen Regelungsverfahren in Abhängigkeit von der ermittelten Differenz Δt ausgewählt.

In Schritt 208 wird von der Regelungsvorrichtung 120 unter Verwendung des ausgewählten Regelungsverfahrens und der Eingangsgröße ein Sollwert für die Größe ermittelt.

In Schritt 209 wird der ermittelte Sollwert von der Regelungsvorrichtung 120 der Windenergieanlage 100 bereitgestellt, insbesondere den Regelungsvorrichtungen 107 und/oder 109.

Aufgrund von Verzögerungen in der Bereitstellungen von Eingangsgrößen von der Vorrichtung 160 an die Regelungsvorrichtung 120, die zum Beispiel aus einer Priorisierung von Anfragen, Signallaufzeiten, einer Störung in der Kommunikation sowie der Bearbeitungsdauer in der Vorrichtung 160 begründet sein können, liegt zwischen dem Senden der Abfrage und dem Empfangen des Wertes durch die Regelungsvorrichtung 120 der Zeitraum Δt. Die Regelungsvorrichtung 120 ist eingerichtet, diesen Zeitraum Δt zu ermitteln, also die Differenz zwischen dem Zeitpunkt t1 des Absendens und dem Zeitpunkt t2 des Empfangens. In Abhängigkeit der Länge des Zeitraums wird die Eingangsgröße zur Regelung der Windenergieanlage 100 verwendet. Zudem wird in Abhängigkeit der Länge des Zeitraums ermittelt, welche Regelungen mit dem empfangenen Wert möglich sind, um eine präzise Regelung der Windenergieanlage 100 zu gewährleisten.

Beispielsweise wird die Abfrage zu einem ersten Zeitpunkt t1 gesendet. Die Antwort der Vorrichtung 160 wird von der Regelungsvorrichtung 120 zu einem späteren Zeitpunkt t2 empfangen. Durch einen Vergleich der beiden Zeitpunkte t1 und t2 wird die Verzögerung Δt ermittelt.

Wenn keine Antwort empfangen wird, beispielsweise aufgrund eines Defektes, wechselt die Regelungsvorrichtung 120 nach Ablauf eines vorgegebenen Zeitraums gemäß Ausführungsformen auf eine bezüglich dem Windpark lokale Regelung unabhängig von der Vorrichtung 160. Insbesondere kann das lokale Regelungsverfahren ein Steuerungsverfahren umfassen. Das Steuerungsverfahren umfasst beispielsweise die Bestimmung eine Sollwerts für die Windenergieanlagen 100 durch die Regelungsvorrichtung 120 aus vordefinierten Größen, beispielsweise am Übergabepunkt einzuhaltender elektrischer Größen.

Insbesondere umfasst die Abfrage eine Identifikationsnummer. Die Identifikationsnummer sowie der Zeitpunkt t1 werden von der Regelungsvorrichtung 120 gespeichert. Alternativ wird die Identifikationsnummer gespeichert, in der der Zeitpunkt t1 enthalten ist. Die Identifikationsnummer wird gemeinsam mit der Abfrage an die Vorrichtung 160 übermittelt. Der Wert der Eingangsgröße wird von der Vorrichtung 160 gemeinsam mit der Identifikationsnummer der Abfrage an die Regelungsvorrichtung 120 gesendet. Der zweite Zeitpunkt t2 des Empfangs des Wertes wird von der Regelungsvorrichtung 120 ermittelt und gespeichert. Durch die übermittelte Identifikationsnummer ist ein Zuordnen der Zeitpunkte der Abfrage und des Empfangs der Eingangsgröße möglich. Die Differenz zwischen den beiden zu einer gemeinsamen Identifikationsnummer zugeordneten Zeitpunkten t1 und t2 wird von der Regelungsvorrichtung 120 ermittelt. Die Regelungsvorrichtung 120 ist eingerichtet, in Abhängigkeit von dieser Differenz ein Regelungsverfahren für die Windenergieanlage 100 aus einer Mehrzahl von vorgegebenen Regelungsverfahren auszuwählen. Die Windenergieanlage 100 wird von der Regelungsvorrichtung 120 in Abhängigkeit von dem empfangenen Wert der Größe unter Verwendung des ausgewählten Regelungsverfahrens geregelt beziehungsweise betrieben.

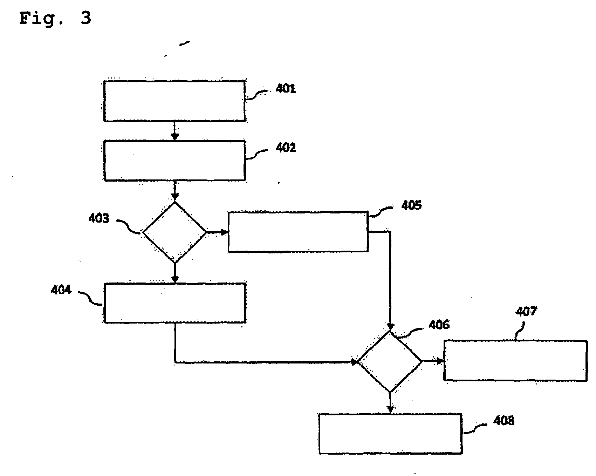

Figur 3 zeigt eine schematische Darstellung des Verfahrens gemäß einer weiteren Ausführungsform.

In Schritt 401 erfolgt die Abfrage nach der Eingangsgröße. Die Abfrage erfolgt insbesondere zyklisch. Die Abfrage wird in festen Zeitabständen Δt4 wiederholt. Beispielsweise wird die Abfrage alle 40 ms wiederholt. Die Eingangsgröße wird bei der Vorrichtung 160 abgefragt. Die empfangene Eingangsgröße wird insbesondere in der Speichervorrichtung abgespeichert, beispielsweise in einem Register.

In Schritt 402 wird die Identifikationsnummer der jüngsten empfangenen Eingangsgröße ermittelt. Die jüngsten empfangene Eingangsgröße ist beispielsweise die Eingangsgröße, die zeitlich am nächsten an dem Zeitpunkt der Ermittlung liegt. Alternativ oder zusätzlich wird der Zeitpunkt t2 der jüngsten empfangenen Eingangsgröße ermittelt.

In Schritt 403 wird ermittelt, ob die jüngste empfangene Eingangsgröße in Antwort auf die jüngste Abfrage empfangen wurde. Dazu wird beispielsweise ermittelt, ob die Identifikationsnummer mit der Identifikationsnummer der jüngsten Abfrage übereinstimmt.

Wenn auf die jüngste Abfrage keine Eingangsgröße empfangen wurde, wird in Schritt 404 ein Zähler inkrementiert.

Wenn die jüngste empfangene Eingangsgröße in Antwort auf die jüngste Abfrage empfangen wurde, wird in Schritt 405 der Zähler auf null gesetzt beziehungsweise auf null gehalten.

In Schritt 406 wird ermittelt, ob der Zählerstand kleiner als ein vorgegebener Vergleichswert für den Zählerstand ist. Beispielsweise ist der Vergleichswert für den Zählerstand 2.

Wenn der Zählerstand kleiner als der vorgegebene Vergleichswert für den Zählerstand ist, also beispielsweise 0 oder 1, wird die jüngste empfangene Eingangsgröße in Schritt 407 für die Regelung der Windenergieanlage verwendet.

Wenn der Zählerstand gleich dem vorgegebenen Vergleichswert für den Zählerstand ist oder größer als der vorgegebene Vergleichswert für den Zählerstand ist, also beispielsweise 2 oder > 2, wird die jüngste empfangene Eingangsgröße in Schritt 408 nicht für die Regelung der Windenergieanlage verwendet.

Unter optimalen Bedingungen ist der Zähler dauerhaft null. Innerhalb eines Abfragezyklus erfolgt keine qualitative Unterscheidung der Signalqualität. Beispielsweise ist eine Aktualität der empfangenen Eingangsgröße von < 40 ms ausreichend für eine präzise Regelung der Windenergieanlage 100.

### Bezugszeichen

- 100: Windenergieanlage
- 101: Rotor
- 102: Rotorblatt
- 103: Generator
- 104: Umrichter
- 105: generatorseitiger Umrichter
- 106: netzseitiger Umrichter
- 107: Regelungsvorrichtung
- 108: Transformator
- 109: Regelungsvorrichtung
- 110: System
- 120: Regelungsvorrichtung
- 130: Übergabestation
- 140: Transformator
- 150: elektrisches Versorgungsnetzwerk
- 160: Vorrichtung
- 201 - 209: Verfahrensschritte
- 401 - 408: Verfahrensschritte

## Patentansprüche

1. Verfahren zum Betreiben mindestens einer Windenergieanlage (100), umfassend:
- Senden einer Abfrage nach einer Eingangsgröße einer für die Regelung der mindestens einen Windenergieanlage (100) relevanten Größe zu einem ersten Zeitpunkt (t1);
- regelmäßiges Wiederholen des Sendens der Abfrage nach der Eingangsgröße mit einem vorgegebenen zeitlichen Abstand (Δt4);
- Empfangen der Eingangsgröße zu einem zweiten Zeitpunkt (t2) ;
- Ermitteln einer Differenz (Δt) zwischen dem ersten (t1) und dem zweiten (t2) Zeitpunkt;
- Vergleichen der Differenz (Δt) zwischen dem ersten (t1) und dem zweiten (t2) Zeitpunkt mit dem zeitlichen Abstand (Δt4);
- Setzen eines Zählerstandes eines Zählers auf den Wert 0, wenn die Differenz (Δt) kleiner als der zeitliche Abstand (Δt4) ist;
- Erhöhen des Zählerstandes des Zählers um den Wert 1, wenn die Differenz (Δt) gleich dem oder größer als der zeitliche Abstand (Δt4) ist;
- Ermitteln eines Regelungsverfahrens aus einer Mehrzahl von vorgegebenen Regelungsverfahren zur Regelung der mindestens einen Windenergieanlage (100) in Abhängigkeit des Zählerstandes, der von der ermittelten Differenz (Δt) abhängig ist.

2. Verfahren nach Anspruch 1, bei dem das Ermitteln des Regelungsverfahrens umfasst:
- Vergleichen des Zählerstandes mit einem vorgegebenen Vergleichswert für den Zählerstand;
- Verwenden der empfangenen Eingangsgröße, wenn der Zählerstand kleiner als ein vorgegebenen Vergleichswert für den Zählerstand ist.

3. Verfahren nach Anspruch 1 oder 2,
- Sender der Abfrage zusammen mit einer Identifikationsnummer für die Abfrage.

4. Verfahren nach Anspruch 3, bei dem der erste Zeitpunkt Teil der Identifikationsnummer ist.

5. Verfahren nach einem der Ansprüche 1 bis 4, bei die Eingangsgröße der für die Regelung der mindestens einen Windenergieanlage (100) relevanten Größe ein aktueller Messwert ist.

6. Verfahren nach einem der Ansprüche 1 bis 5, zum Betreiben der mindestens einen Windenergieanlage (100), die mit einem elektrischen Versorgungsnetz (150) gekoppelt ist, bei dem das Senden der Abfrage nach der Eingangsgröße der für die Regelung der mindestens einen Windenergieanlage (100) relevanten Größe umfasst:
- Senden einer Abfrage nach einer Eingangsgröße einer elektrischen Größe des elektrischen Versorgungsnetzes (150).

7. Verfahren nach einem der Ansprüche 1 bis 6, bei dem die Eingangsgröße der für die Regelung der mindestens einen Windenergieanlage (100) relevanten Größe mindestens eine Größe umfasst aus dem:
- Wert einer Netzspannung eines mit der mindestens einen Windenergieanlage gekoppelten elektrischen Versorgungsnetzes (150),
- Wert einer Netzfrequenz eines mit der mindestens einen Windenergieanlage gekoppelten elektrischen Versorgungsnetzes (150),
- Wert eines Leistungsfaktor eines mit der mindestens einen Windenergieanlage gekoppelten elektrischen Versorgungsnetzes (150),
- Wert eines Phasenwinkel eines mit der mindestens einen Windenergieanlage gekoppelten elektrischen Versorgungsnetzes (150),
- Wert einer Blindleistung,
- Wert einer Wirkleistung,
- Wert einer Scheinleistung,
- Wert eines Blindstromes,
- Wert eines Wirkstromes,
- Wert eines Scheinstromes.

8. Verfahren nach einem der Ansprüche 1 bis 7, bei dem der erste (t1) und der zweite (t2) Zeitpunkt jeweils einen Wert einer absoluten Uhrzeit umfassen und/oder einen Wert eines eigenständigen Zeitsystems.

9. Vorrichtung (120) für mindestens eine Windenergieanlage (100), die eingerichtet ist zum:
- Senden einer Abfrage nach einer Eingangsgröße einer für die Regelung der mindestens einen Windenergieanlage (100) relevanten Größe zu einem ersten Zeitpunkt (t1);
- regelmäßiges Wiederholen des Sendens der Abfrage nach der Eingangsgröße mit einem vorgegebenen zeitlichen Abstand (Δt4),
- Empfangen der Eingangsgröße zu einem zweiten Zeitpunkt (t2);
- Ermitteln einer Differenz (Δt) zwischen dem ersten (t1) und dem zweiten (t2) Zeitpunkt;
- Vergleichen der Differenz (Δt) zwischen dem ersten (t1) und dem zweiten (t2) Zeitpunkt mit dem zeitlichen Abstand (Δt4);
- Setzen eines Zählerstandes eines Zählers auf den Wert 0, wenn die Differenz (Δt) kleiner als der zeitliche Abstand (Δt4) ist;
- Erhöhen des Zählerstandes des Zählers um den Wert 1, wenn die Differenz (Δt) gleich dem oder größer als der zeitliche Abstand (Δt4) ist;
- Ermitteln eines Regelungsverfahrens aus einer Mehrzahl von vorgegebenen Regelungsverfahren zur Regelung der mindestens einen Windenergieanlage (100) in Abhängigkeit des Zählerstandes, der von der ermittelten Differenz (Δt) abhängig ist,
- Ermitteln eines Sollwertes zur Regelung der mindestens einen Windenergieanlage (100) unter Verwendung des ermittelten Regelungsverfahrens.

## Claims

1. Method for operating at least one wind turbine (100), comprising:
- sending a request for an input variable of a variable being relevant for the control of the at least one wind turbine (100) at a first time (t1);
- regularly repeating said sending the request for the input variable at a predetermined time interval (Δt4);
- receiving the input variable at a second time (t2);
- determining a difference (At) between the first (t1) and the second (t2) time;
- comparing the difference (At) between the first (t1) and the second (t2) time to the predetermined time interval (Δt4);
- setting a count of a counter to value 0 when the difference (At) is smaller than the predetermined time interval (Δt4);
- increasing the count of the counter by the value 1 when the difference (At) is greater than or equal to the predetermined time interval (Δt4);
- determining a control method from a plurality of predetermined control methods for controlling the at least one wind turbine (100) depending on the count which depends on the determined difference (Δt).

2. Method according to claim 1, in which determination of the control method comprises:
- comparing the count with a predetermined comparative value for the count;
- using the received input variable when the count is smaller than a predetermined comparative value for the count.

3. Method according to claim 1 or 2,
- sending the request together with an identification number for the request.

4. Method according to claim 3, in which the first time is part of the identification number.

5. Method according to one of claims 1 to 4, in which the input variable for the variable being relevant for the control of the at least one wind turbine (100) is a current measurement value.

6. Method according to one of claims 1 to 5, for operating the at least one wind turbine (100) which is coupled to an utility grid (150), in which sending the request for the input variable relevant for controlling the at least one wind turbine (100) comprises:
- sending a request for an input variable of an electric variable of the utility grid (150).

7. Method according to one of claims 1 to 6, in which the input variable relevant for controlling the at least one wind turbine (100) comprises at least one variable of:
- the value of a voltage of an utility grid (150) coupled with the wind turbine,
- the value of a line frequency of an utility grid (150) coupled with the at least one wind turbine;
- the value of a performance factor of an utility grid (150) coupled with the at least one wind turbine,
- value of a phase angle of an utility grid (150) coupled with the at least one wind turbine,
- the value of a reactive power,
- the value of an active power,
- the value of an apparent power,
- the value of a reactive current,
- the value of an active current,
- the value of an apparent current.

8. Method according to one of claims 1 to 7, in which the first (t1) and the second (t2) time include in each case a value of an absolute day time and/or a value of an autonomous time system.

9. Device (120) for at least one wind turbine (100), configured for:
- Sending a request for an input variable of a variable being relevant for the control of the at least one wind turbine (100) at a first time (t1);
- regularly repeating said sending the request for the input variable with a predetermined time interval (Δt4);
- receiving the input variable at a second time (t2);
- determining a difference (At) between the first (t1) and the second (t2) time;
- comparing the difference (At) between the first (t1) and the second (t2) time to the predetermined time interval (Δt4);
- setting a count of a counter to value 0 when the difference (At) is smaller than the predetermined time interval (Δt4);
- increasing the count of the counter by the value 1 when the difference (At) is greater than or equal to the predetermined time interval (Δt4);
- determining a control method from a plurality of predetermined control methods for controlling the at least one wind turbine (100) depending on the count which depends on the determined difference (Δt),
- determining a desired value for controlling the at least one wind turbine (100) using the determined control method.

## Revendications

1. Procédé de fonctionnement d'au moins une éolienne (100), comprenant :
- envoyer une interrogation d'une donnée d'entrée d'une valeur pertinente pour le réglage de l'au moins une éolienne (100) à un premier temps ultérieur (t1) ;
- répéter périodiquement d'envoyer l'interrogation pour la donnée d'entrée à un intervalle de temps prédéfini (tΔ4)
- recevoir la donnée d'entrée à un deuxième temps (t2) ;
- déterminer d'une différence (Δt) entre le premier (t1) et le deuxième (t2) temps
- comparer la différence (Δt) entre le premier (t1) et le deuxième (t2) temps au moyen de l'intervalle de temps (Δt4) ;
- imposer une indication de consommation du compteur à la valeur zéro, si la différence (Δt) est inférieure à l'intervalle de temps (Δt4) ;
- augmenter l'indication de consommation du compteur par la valeur 1, si la différence (Δt) est égale ou supérieure à l'intervalle de temps (Δt4) ;
- déterminer d'un procédé de réglage à partir d'une pluralité des procédés de réglage destinées au réglage de l'au moins une éolienne (100) en fonction de l'indication de consommation dépendant de la différence (Δt) déterminée.

2. Procédé selon la revendication 1, dans lequel la détermination du procédé de réglage comprend :
- comparer l'indication de consommation avec une valeur comparative pour l'indication de consommation
- utilisation de la donnée d'entrée reçue, si l'indication de consommation est inférieure à une valeur comparative prédéfinie pour l'indication de consommation.

3. Procédé selon la revendication 1 ou 2,
- envoyer l'interrogation avec une chiffe d'identification pour l'interrogation.

4. Procédé selon la revendication 3, dans lequel le premier temps fait partie de chiffre d'identification.

5. Procédé selon une des revendications 1 à 4, dans lequel la valeur d'entrée de la donnée relevant pour le réglage de l'au moins une éolienne (100) est une valeur de mesure actuelle.

6. Procédé selon une des revendications 1 à 5, pour le fonctionnement de l'au moins une éolienne (100) couplée avec un réseau de distribution électrique (150), dans lequel l'envoi l'interrogation pour la valeur d'entrée relevant pour le réglage de l'au moins une éolienne (100) comprend :
- envoyer d'une interrogation pour une donnée d'entrée d'une donnée électrique du réseau de distribution électrique (150).

7. Procédé selon une des revendications 1 à 6, dans lequel la donnée d'entrée relevant pour le réglage de l'au moins une éolienne (100) comporte une donnée à partir du
- valeur d'une tension réseau d'un réseau de distribution électrique (150) connectée avec l'au moins une éolienne
- valeur d'une fréquence de réseau d'un réseau de distribution électrique (150) connectée avec l'au moins une éolienne
- valeur d'un facteur de puissance d'un réseau de distribution électrique (150) connectée avec l'au moins une éolienne,
- valeur d'un angle de phase du réseau de distribution électrique (150) connectée avec l'au moins une éolienne,
- valeur d'une puissance réactive
- valeur d'une puissance active
- valeur d'une puissance apparente
- valeur d'une courant réactive
- valeur d'une courant active
- valeur d'une courant apparente.

8. Procédé selon l'une des revendications 1 à 7, dans lequel le premier (t1) et le deuxième (t2) temps comprend respectivement une valeur d'un temps absolu et/ou une valeur d'un système d'horloge indépendante.

9. Dispositif (120) pour l'au moins une éolienne (100), ledit dispositif adapté à :
- envoyer une interrogation d'une donnée d'entrée d'une valeur pertinente pour le réglage de l'au moins une éolienne (100) à un premier temps (t1) ;
- répéter périodiquement d'envoyer l'interrogation pour la donnée d'entrée à un intervalle de temps prédéfini (tΔ4)
- recevoir la donnée d'entrée à un deuxième temps (t2) ;
- déterminer d'une différence (Δt) entre le premier (t1) et le deuxième (t2) temps
- comparer la différence (Δt) entre le premier (t1) et le deuxième (t2) temps au moyen de l'intervalle de temps (Δt4) ;
- imposer une indication de consommation d'un compteur à la valeur zéro, si la différence (Δt) est inférieure à l'intervalle de temps (Δt4) ;
- augmenter l'indication de consommation du compteur par la valeur 1, si la différence (Δt) est égale ou supérieure à l'intervalle de temps (Δt4) ;
- déterminer d'un procédé de réglage à partir d'une pluralité des procédés de réglage prédéfinies destinées au réglage de l'au moins une éolienne (100) en fonction de l'indication de consommation dépendant de la différence (Δt) déterminée,
- déterminer une valeur de consigne pour le réglage de l'au moins une éolienne (100) en utilisant le procédé de réglage déterminé.
